## Europäisches Patentamt
## European Patent Office
## Office européen des brevets

(11) Numéro de publication: **0 023 177**
**B1**

(12) # FASCICULE DE BREVET EUROPEEN

(45) Date de publication du fascicule du brevet:
**25.05.83**

(51) Int. Cl.³: **G 21 C 15/24,** G 21 C 13/02

(21) Numéro de dépôt: **80401068.4**

(22) Date de dépôt: **17.07.80**

(54) **Chaudière nucléaire.**

(30) Priorité: **24.07.79 FR 7919053**

(43) Date de publication de la demande:
**28.01.81 Bulletin 81/4**

(45) Mention de la délivrance du brevet:
**25.05.83 Bulletin 83/21**

(84) Etats contractants désignés:
**BE DE GB IT NL SE**

(56) Documents cités:
**DE-A-2 326 907**
**FR-A-1 473 406**
**FR-A-2 265 152**
**FR-A-2 282 698**
**FR-A-2 337 409**
**GB-A-809 796**
**US-A-3 425 907**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Aubert, Gilles, 9, Avenue des Chênes, F-91400 Orsay (FR)**

(74) Mandataire: **Mongrédien, André et al, c/o BREVATOME 25, rue de Ponthieu, F-75008 Paris (FR)**

BUNDESDRUCKEREI BERLIN

## Chaudière nucléaire

La présente invention concerne une chaudière nucléaire comportant un réacteur à eau ordinaire sous pression.

L'invention se rapporte plus particulièrement à une chaudière nucléaire du type comprenant une cuve fermée à sa partie supérieure par un couvercle démontable, un panier portant le cœur du réacteur et séparant la cuve en une zone interne chaude et une zone externe froide, au moins un générateur de vapeur disposé à l'extérieur de la cuve et comportant une enceinte étanche, une plaque à tubes séparant l'enceinte en une partie primaire, ou boîte à eau, et une partie secondaire, et portant des tubes en U dont les extrémités débouchent dans deux zones concentriques de la boîte à eau séparées par une structure interne, au moins un conduit de liaison chaud et un conduit de liaison froid reliant respectivement la zone chaude et la zone froide de la cuve à chacune des zones concentriques de la boîte à eau. Une chaudière nucléaire de ce type est connue notamment de la publication FR-A-2 337 409.

Dans les chaudières nucléaires de ce type, il est souhaitable d'avoir accès aux parois internes de l'enceinte sous pression du circuit primaire, de façon à pouvoir effectuer les opérations d'inspection en service prévues par les règlements. Il est également souhaitable de pouvoir remplacer facilement les différents organes disposés à l'intérieur de l'enceinte et des générateurs de vapeur ainsi que de pouvoir inspecter ou réparer ces organes, de préférence à un poste de travail externe permettant de réaliser dans de bonnes conditions matérielles et avec un minimum d'irradiation ces différentes opérations.

On connait par ailleurs de la publication GB-A-809 796 une chaudière nucléaire dans laquelle l'enveloppe externe de la partie secondaire du generateur de vapeur est démontable.

L'invention a donc pour objet une chaudière nucléaire dans laquelle les opérations de contrôle en service, de réparation, et de changement éventuel des organes internes, et notamment du faisceau de tubes, des structures internes de la boîte à eau et de l'enveloppe sous pression de celle-ci, sont facilitées.

Dans ce but, et conformément à l'invention, une chaudière nucléaire du type défini précédemment se caractérise en ce que la plaque à tubes, les tubes et la partie secondaire de l'enceinte du générateur de vapeur définissent un sous-ensemble démontable de la partie primaire de l'enceinte (boîte à eau), le conduit de liaison chaud étant monté de façon démontable entre le panier et la structure interne de la boîte à eau, cette structure étant elle-même montée de façon démontable dans la partie primaire de l'enceinte, la cuve, le conduit de liaison froid et la partie primaire de l'enceinte étant réalisés en une seule pièce.

Grâce à cette structure particulière, la partie secondaire du générateur de vapeur, la structure interne de la boîte à eau et le conduit de liaison chaud peuvent être démontés, ce qui permet de les contrôler, de les réparer ou de les remplacer, et ce qui facilite l'inspection en service des parois internes de l'enceinte sous pression du circuit primaire.

Selon un mode de réalisation préféré de l'invention, le conduit de liaison chaud est rectiligne et de longueur inférieure au diamètre interne de la cuve, de façon à pouvoir être extrait par cette dernière après démontage du couvercle et enlèvement du panier de cœur. Le conduit de liaison chaud peut alors être fixé au panier de façon étanche par des moyens de fixation démontables et reçu en coulissement de façon étanche dans un orifice formé dans la structure interne de la boîte à eau, ce qui permet de compenser la dilatation différentielle pouvant se produire entre ces différents organes. Les moyens de fixation démontables peuvent alors comprendre une clavette disposée transversalement par rapport au conduit de liaison chaud et normalement immobilisée par le couvercle de la cuve.

Conformément à une autre caractéristique de l'invention, les parties primaire et secondaire de l'enceinte du générateur de vapeur portent des brides entre lesquelles sont disposés des moyens de serrage démontables. De préférence, la structure interne de la boîte à eau comprend alors une collerette pincée entre les parties primaire et secondaire de l'enceinte sous l'action des moyens de serrage démontables. Conformément à un mode de réalisation particulier de l'invention, la structure interne de la boîte à eau comprend alors deux bols concentriques reliés par des ailettes et délimitant des zones concentriques de la boîte à eau, et la collerette pincée entre les parties primaire et secondaire de l'enceinte fermée est solidaire du bol externe.

Selon encore une autre caractéristique de l'invention, une pompe est fixée sur la partie primaire de l'enceinte, des moyens étant prévus entre la pompe et la structure interne de la boîte à eau pour solliciter la collerette vers la plaque à tubes.

On décrira maintenant, à titre d'exemple non limitatif, deux modes de réalisation particuliers de l'invention en se référant aux dessins annexés dans lesquels:

— la figure 1 est une vue en coupe de la chaudière d'un réacteur à eau pressurisée dont la cuve communique avec un ensemble comprenant un générateur de vapeur et sa pompe,

— la figure 2 est une vue en coupe agrandie de la partie inférieure du générateur de vapeur représenté sur la figure 1, et

— la figure 3 est une vue en coupe agrandie de la partie inférieure d'un générateur de vapeur illustrant un autre mode de réalisation d'une chaudière nucléaire selon l'invention.

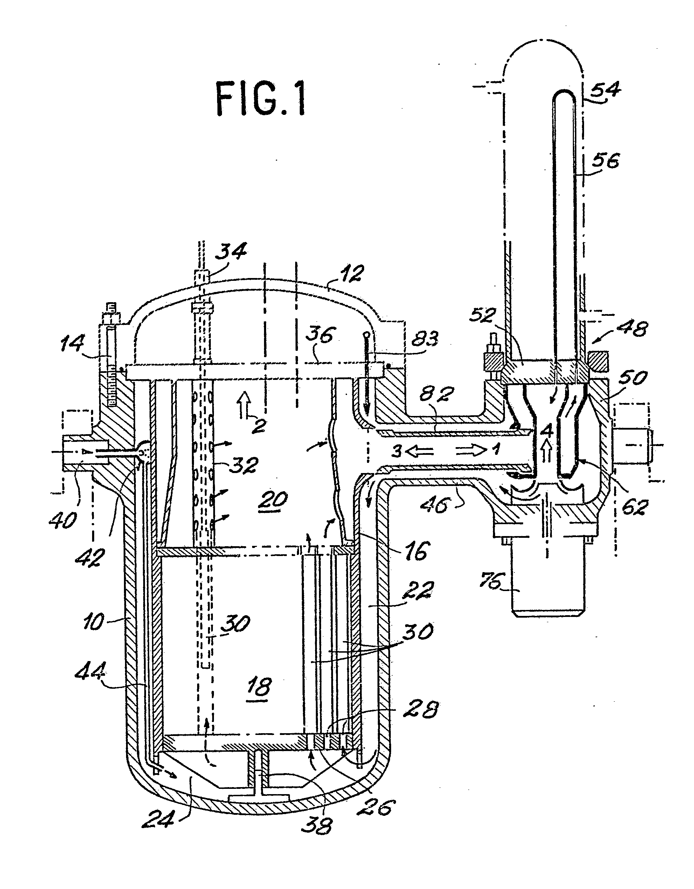

La chaudière nucléaire représentée sur la figure 1 comprend une cuve 10 fermée à sa partie supérieure par un couvercle 12 fixé à la cuve 10 par des goujons 14. La cuve 10 est cylindrique, d'axe vertical, un panier 16 portant le cœur 18 du réacteur. Le panier et contient 16 sépare ainsi la cuve 10 en une zone interne chaude 20, sensiblement cylindrique, et une zone externe froide 22, formant un espace annulaire. Un passage 24 est défini entre l'extrémité inférieure du panier 16 et le fond de la cuve 10, ce qui permet au fluide de la zone froide de pénétrer dans les orifices 28 de la grille 26.

Le panier 16 est porté par une plaque 36 serrée entre le bouchon 12 et la cuve 10, et centrée par rapport à cette dernière au moyen d'une pièce 38.

Le panier 16 supporte le cœur 18 au moyen d'une grille 26 percée de passages 28 par lesquels le fluide primaire froid contenu dans la zone externe 22 est admis à l'intérieur d'assemblages de combustibles 30 contenus dans le cœur 18. Chacun des assemblages de combustible 30 est surmonté d'un tube de guidage 32 porté par la plaque 36 et dans lequel coulisse une barre de contrôle dont la tige de commande 34 traverse le couvercle 12.

Un ou plusieurs orifices radiaux 40 sont ménagés dans la paroi de la cuve 10, de façon à permettre l'injection dans la partie basse de celle-ci, par l'intermédiaire d'une valve de non-retour 42 et d'une conduite 44, d'un liquide de refroidissement de secours dans le cas où la circulation du liquide primaire dans la cuve 10 serait accidentellement interrompue.

Des conduits radiaux 46 relient également la cuve 10 à la partie primaire, ou boîte à eau 50, de générateurs de vapeur 48 comprenant chacun une plaque à tubes 52 séparant la boîte à eau 50 d'une partie secondaire 54 du générateur de vapeur. La plaque à tubes 52 porte des tubes en U 56 dont les extrémités débouchent dans deux zones concentriques 58 et 60 de la boîte à eau 50 séparées par une structure interne 62.

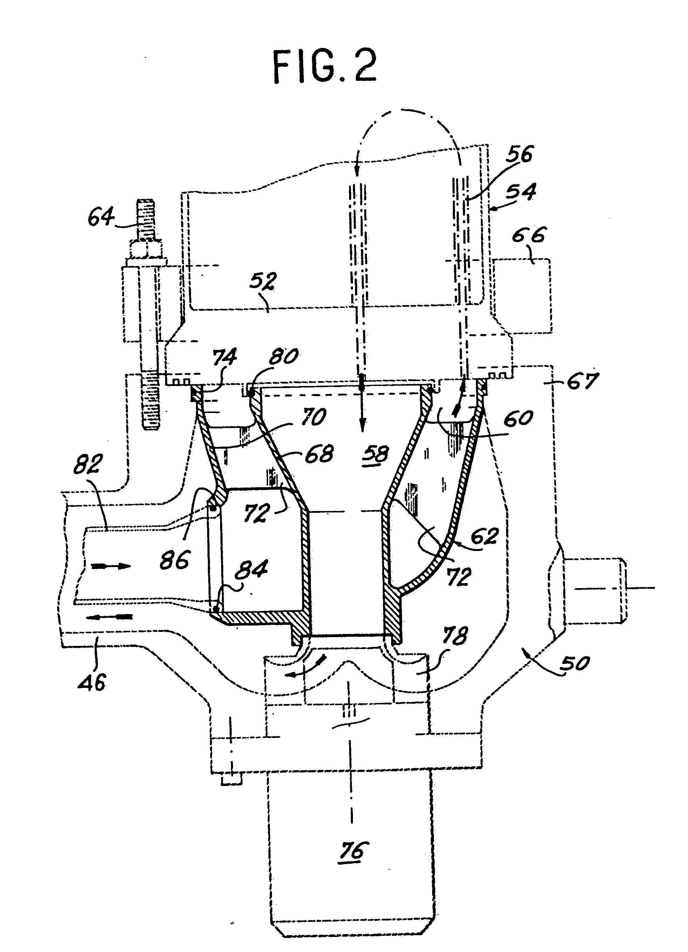

Conformément à l'invention, et comme l'illustrent les figures 1 et 2, la plaque à tubes 52, les tubes 56 et la partie sencondaire 54 de l'enceinte du générateur de vapeur 48 définissent un sous-ensemble fixé de façon démontable à la partie primaire 50 du générateur de vapeur au moyen de goujons 64 vissés dans une bride 67 formée dans l'enceinte de la boîte à eau 50 et agissant par l'intermédiaire d'une bride 66 sur la plaque à tube 52.

Comme l'illustre en particulier la figure 2, la structure interne 62 de la boîte à eau 50 comprend deux bols concentriques 68 et 70 reliés par des ailettes 72. Le bol externe 70 comprend une collerette 74 pincée entre la plaque à tubes 52 et l'enceinte de la boîte à eau 50 sous l'action des goujons 64 et le bol interne 68 comprend une partie supérieure, cylindrique, qui porte un joint d'étanchéité annulaire 80 venant engager une saillie annulaire sur la plaque à tubes 52. Ainsi, la zone externe 60 est définie entre les bols 68 et 70, alors que la zone interne 58 est formée à l'intérieur du bol 68.

Dans le mode de réalisation représenté, à chaque générateur de vapeur 48 est associée une pompe 76 disposée sensiblement dans le prolongement axial du générateur et portant de préférence un système de guidage 78 autorisant le passage du liquide primaire contenu dans la zone interne 58 vers la cuve 10 et sollicitant la structure interne 62 vers la plaque à tubes 52, afin notamment d'assurer l'étanchéité entre les zones 58 et 60 de la boîte à eau 50 définies par la structure interne 62.

Comme l'illustre en particulier la figure 1, un second conduit 82 est disposé à l'intérieur du conduit 46, de façon à mettre en communication la zone annulaire externe 60 de la boîte eau 62 avec la zone interne 20 de la cuve 10, et à définir avec le conduit 46 un passage annulaire mettant en communication la zone interne 58 de la boîte à eau 62 avec la zone externe 22 de la cuve 10 par l'intermédiaire de la pompe 76.

Comme l'illustre la figure 1, le conduit 82 est disposé de façon démontable entre la structure interne 62 de la boîte à eau et le panier 16. Plus précisément, le conduit de liaison 82 est fixé de façon étanche au panier 16, par exemple au moyen d'une clavette disposée transversalement par rapport au conduit et normalement immobilisée par le couvercle 12 de la cuve comme l'illustre schématiquement la référence 83 sur la figure 1. L'autre extrémité du conduit de liaison 82 est reçue en coulissement de façon étanche dans un orifice 86 formé dans le bol externe 70 de la structure 62. Comme le montre en particulier la figure 2, l'étanchéité entre le conduit de liaison 82 et le bol externe 70 est réalisée au moyen d'un joint annulaire 84. Enfin, et afin de permettre le démontage du conduit 82 par la cuve 10 dans le sens de la flèche (3) représentée sur la figure 1, le conduit 82 est rectiligne et sa longueur est inférieure au diamètre interne de la cuve.

Le fonctionnement de la chaudière nucléaire décrite en se référant aux figures 1 et 2 est identique au fonctionnement des chaudières nucléaires de ce type connues et ne sera pas décrit ici en détail. On remarquera simplement que, dans le mode de réalisation décrit, le liquide primaire contenu dans la cuve 10, dans les conduits 46 et dans la boîte à eau 50 des générateurs de vapeur 48 circule dans le sens des flèches sur la figure 1. Ainsi, le liquide chaud contenu dans la zone 20 de la cuve 10 est acheminé à l'intérieur des conduits internes 82 vers la zone annulaire externe 60 de chacune des boîtes à eau 50. Le liquide primaire circule ensuite dans chacun des tubes en U 56 des générateurs de vapeur 48 de façon à vaporiser le liquide secondaire contenu dans la partie qui sort des tubes en U 56 pour pénétrer dans la zone interne 58 de la boîte à eau 50 est ensuite acheminé sous l'impulsion de la pompe 76 par l'espace annulaire défini entre les conduits 46 et 82 dans la zone externe 22 de la cuve 10, puis recyclé dans le cœur 18 du réacteur dans lequel il pénètre par le passage 24 et la grille 26.

Conformément à l'invention, et comme l'illustre en particulier la figure 1, la chaudière nucléaire qui vient d'être décrite peut être facilement démontée de façon à permettre d'effecteur les opérations d'inspection en service des parois de l'enceinte sous pression du circuit primaire prévu par les règlements tout en facilitant la réparation et le remplacement éventuel des organes internes de la chaudière, et notamment du faisceau de tubes 56 des générateurs de vapeur, des structures internes 62 de la boîte à eau 50 et de l'enceinte sous pression de celle-ci.

Ainsi, dans le mode de réalisation représenté, le démontage des structures internes de la chaudière s'effectue, après enlèvement du couvercle 12 puis de la clavette 84, en faisant coulisser le conduit 82 dans le sens de la flèche 1, de façon à dégager celui-ci de l'ouverture formée dans le panier 16, de telle sorte que celui-ci peut être extrait de la cuve 10 comme le montre la flèche 2. Le conduit interne 82 peut alors être démonté par la cuve 10 en le faisant coulisser dans le sens de la flèche 3. Après démontage des goujons 64, la partie supérieure ou secondaire 54 du générateur de vapeur 48 peut également être démontée, de telle sorte que la structure interne 62 de la boîte à eau 50 se trouve dégagée et peut être extraite facilement comme l'indique la flèche 4 sur la figure 1. Les parois internes de la cuve 10, des conduits 46 et de l'enceinte des boîtes à eau 50 peuvent ainsi être facilement contrôlées et un poste de travail bien équipé permettant de réaliser dans de bonnes conditions matérielles et avec le minimum d'irradiation toutes opérations d'inspection ou de réparation de ces structures. Toutes les opérations de démontage qui viennent d'être décrites, ainsi que les opérations de montage qui leur correspondent sont réalisées au moyen de machines spéciales de manutention commandées à distance.

Bien entendu, l'invention n'est pas limitée à la structure particulière de la chaudière nucléaire qui vient d'être décrite, mais en couvre toutes les variantes. Ainsi, les conduits de liaison 82 peuvent mettre en communication la zone interne chaude 20 de la cuve 10, soit avec la zone externe 60 de la boîte à eau 50 comme représenté sur les figures 1 et 2, soit avec la zone interne 58, de telle sorte que la circulation du liquide primaire à l'intérieur du générateur de vapeur 48 s'effectue dans le sens inverse de celui représenté sur la figure 1. De même, les conduits de liaison chaud 82 et froid 46 qui relient la cuve 10 à chacun des générateurs de vapeur 48 peuvent être disposés dans la même enveloppe sous pression comme l'illustre le mode de réalisation représenté sur les figures 1 et 2, ou dans deux enveloppes différentes de façon à définir des boucles dans lesquelles chaque générateur de vapeur comporte une entrée et une sortie distinctes.

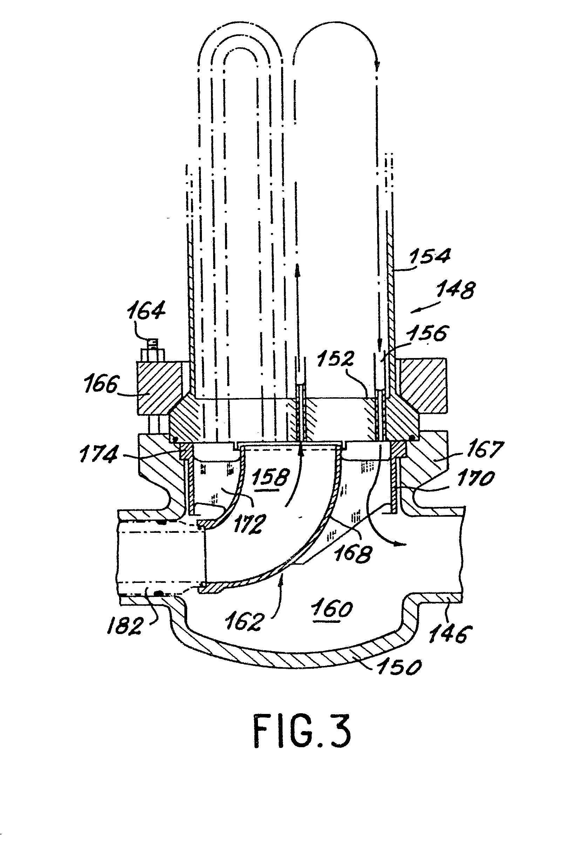

Un exemple de réalisation des deux variantes qui viennent d'être évoquées est représenté sur la figure 3 qui montre la partie inférieure d'un générateur de vapeur 148 comprenant une partie primaire, ou boîte à eau 150 et une partie secondaire 154. Dans cette variante de réalisation de l'invention, le conduit de liaison chaud 182 et le conduit de liaison froid 146 qui relient la boîte à eau 150 à la cuve de la chaudière nucléaire débouchent dans la boîte à eau par deux ouvertures opposées sées, et le conduit de liaison chaud 182 débouche dans la zone interne 158 de la structure interne 162 de la boîte à eau 150, alors que le conduit de liaison froid 146 débouche directement dans la zone externe 160 définie par la structure interne 162. Dans ce cas, et comme l'illustre la figure 3, le bol externe 170 de la structure 162 a pour seule fonction de permettre la fixation démontable de la structure 162 au moyen d'une collerette 174 pincée entre la plaque à tubes 152 et la bride 167 formée sur l'enceinte de la boîte à eau 150 sous l'action des goujons 164 agissant sur la plaque à tubes 152 par l'intermédiaire de la bride 166. Comme dans le mode de réalisation précédent, le bol externe 170 est relié au bol interne 168 par des ailettes 172. La circulation du fluide primaire dans le générateur de vapeur 148 s'effectue alors dans le sens des flèches sur la figure 3, c'est-à-dire depuis la zone interne 158 vers la zone externe 160.

Comme dans le mode de réalisation précédent et conformément à l'invention, le sous-ensemble constitué par la plaque à tubes 152, par les tubes 156 et par la partie secondaire 154 de l'enceinte du générateur de vapeur peut être démonté au moyen des goujons 164. La structure interne 162 de la boîte à eau 150 peut alors être démontée après démontage des conduits de liaison chauds 182 de la manière décrite en se référant au premier mode de réalisation de l'invention.

## Revendications

1. Chaudière nucléaire comprenant une cuve (10) fermée à sa partie supérieure par un couvercle (12) démontable, un panier (16) portant le cœur (18) du réacteur et séparant la cuve en une zone interne chaude (20) et une zone externe froide (22), au moins un générateur de vapeur (48) desposé à l'extérieur de la cuve et comportant une enceinte étanche, une plaque à tubes (52), séparant l'enceinte en une partie primaire, ou boîte à eau (50), et une partie secondaire (54), et portant des tubes en U (56) dont les extrémités débouchent dans deux zones concentriques (58, 60) de la boîte à eau séparées par une structure interne (62), au moins un conduit de liaison chaud (82) et un conduit de liaison froid (46) reliant respectivement la zone chaude (20) et la zone froide (22) de la cuve (10) à chacune des zones concentriques (60, 58) de la boîte à eau, caractérisée en ce que la plaque à tubes (52), les tubes (56) et la partie secondaire (54) de l'enceinte du générateur de vapeur définissent un sous-ensemble démontable de la partie primaire (50) de l'enceinte, le conduit de liaison chaud (82) étant monté de façon démontable entre le panier (16) et la structure interne de la boîte à eau, cette structure (62) étant ellemême montée de façon démontable dans la partie primaire de l'enceinte, la cuve (10), le conduit de liaison froid (46) et la partie primaire (50) de l'enceinte était realisés en une seule pièce.

2. Chaudière nucléaire selon la revendication 1, caractérisée en ce que le conduit de liaison chaud (82) est rectiligne et de longueur inférieure au diamètre interne de la cuve, de façon à pouvoir être extrait par cette dernière après démontage du couvercle et enlèvement du panier de cœur.

3. Chaudière nucléaire selon la revendication 2, caractérisée en ce que le conduit de liaison chaud (82) est fixé au panier (16) de façon étanche par des moyens de fixation démontables et reçu en coulissement de façon étanche dans un orifice formé dans la structure interne de la boîte à eau.

4. Chaudière nucléaire selon la revendication 3, caractérisée en ce que les moyens de fixation démontables comprennent une clavette (83) disposée transversalement par rapport au conduit de liaison chaud et normalement immobilisée par le couvercle (12) de la cuve (10).

5. Chaudière nucléaire selon l'une quelconque des revendications précédentes, caractérisée en ce que les parties primaire (50) et secondaire (54) de l'enceinte du générateur de vapeur (48) portent des brides (66, 67) entre lesquelles sont disposés des moyens de serrage (64) démontables.

6. Chaudière nucléaire selon la revendication 5, caractérisée en ce que la structure interne de la boîte à eau (50) comprend une collerette (74) pincée entre les parties primaire (50) et secondaire (54) de l'enceinte sous l'action des moyens de serrage (64) démontables.

7. Chaudière nucléaire selon la revendication 6, caractérisée en ce que la structure interne (62) de la boîte à eau (50) comprend deux bols concentriques (68, 70) reliés par des ailettes (72) et délimitant les zones concentriques (58, 60) de la boîte à eau (50), la collerette (74) pincée entre les parties primaire et secondaire de l'enceinte fermée étant solidaire du bol externe (70).

8. Chaudière nucléaire selon l'une quelconque des revendications 6 ou 7, caractérisée en ce qu'une pompe (76) est fixée sous la partie primaire (50) de l'enceinte, des moyens étant prévus entre la pompe (76) et la structure interne (62) de la boîte à eau (50) pour solliciter la collerette (74) vers la plaque à tubes.

## Patentansprüche

1. Nukleardampfkessel, mit einem Druckgefäß (10), dessen Oberteil mit einem abnehmbaren Deckel (12) verschlossen ist, einem den Reaktorkern tragenden Korb (16), der das Druckgefäß in eine innere Warmzone (20) und eine äußere Kaltzone (22) trennt, wenigstens einem Dampferzeuger (48), der außerhalb des Druckgefäßes angeordnet ist und ein dichtes Gehäuse sowie eine Rohrplatte aufweist, die das Gehäuse in einen Primärteil oder einen Wasserkasten (50) sowie in einen Sekundärteil (54) aufteilt, und die U-Rohre (56) trägt, deren Enden in zwei konzentrische, durch eine Innenstruktur getrennte Zonen (58, 60) des Wasserkastens (50) münden, wobei wenigstens eine Warm-Verbindungsleitung (82) und eine Kalt-Verbindungsleitung (46) die Warmzone (20) bzw. die Kaltzone (22) des Druckgefäßes mit jeweils einer der konzentrischen Zonen (60, 58) des Wasserkastens verbinden, dadurch gekennzeichnet, daß die Rohrplatte (52), die Rohre (56) und der Sekundärteil (54) des Dampferzeugergehäuses eine von dem Primärteil (50) des Gehäuses abnehmbare Teilbaugruppe bilden, daß die Warm-Verbindungsleitung (82) zwischen dem Korb (16) und der Innenstruktur des Wasserkastens montiert ist, daß diese Struktur (62) ihrerseits demontierbar in dem Primärteil des Gehäuses montiert ist, und daß das Druckgefäß (10), die Kalt-Verbindungsleitung (46) und der Primärteil (50) des Gehäuses einstückig ausgebildet sind.

2. Nucleardampfkessel nach Anspruch 1, dadurch gekennzeichnet, daß die Warm-Verbindungsleitung (82) gerade ist und eine Länge aufweist, die geringer ist als der Innendurchmesser des Druckgefäßes, um durch dieses hindurch nach Abnahme des Deckels und Anheben des Korbs des Kerns herausgezogen werden zu können.

3. Nukleardampfkessel nach Anspruch 2, dadurch gekennzeichnet, daß die Warm-Verbindungsleitung (82) mit demontierbaren Befestigungsmitteln dichtend an dem Korb befestigt ist und in einer in der Innenstruktur des Wasserkastens ausgebildeten Öffnung unter Abdichtung gleitend aufgenommen wird.

4. Nukleardampfkessel nach Anspruch 3, dadurch gekennzeichnet, daß die demontierbaren Befestigungsmittel einen Keil (83) enthalten, der von dem Deckel (12) des Druckgefäßes (10) quer bezüglich der Warm-Verbindungsleitung und im Normalzustand unbeweglich gelagert wird.

5. Nukleardampfkessel nach einem der vorhergehenden Ansprüche, dadurch gekennzeichnet, daß Primärteil (50) und Sekundärteil (54) des Gehäuses des Dampferzeugers (48) Flansche (66, 67) tragen, zwischen denen demontierbare Spannmittel (64) angeordnet sind.

6. Nukleardampfkessel nach Anspruch 5, dadurch gekennzeichnet, daß die Innenstruktur des Wasserkastens (50) einen zwischen Primärteil (50) und Sekundärteil (54) des Gehäuses unter Einwirkung der demontierbaren Spannmittel (64) festgeklemmten Bund (74) aufweist.

7. Nukleardampfkessel nach Anspruch 6, dadurch gekennzeichnet, daß die Innenstruktur (62) des Wasserkastens (50) zwei konzentrische Behälter (68, 70) aufweist, die über Stege verbunden sind und die konzentrischen Zonen (58, 60) des Wasserkastens (50) begrenzen, und daß der zwischen Primärteil und Sekundärteil des geschlossenen Gehäuses festgeklemmte Bund (74) einstückig mit dem äußeren Behälter (70) ausgebildet ist.

8. Nukleardampfkessel nach Anspruch 6 oder 7, dadurch gekennzeichnet, daß unter dem Primärteil (50) des Gehäuses eine Pumpe (76) befestigt ist, wobei zwischen der Pumpe (76) und der Innenstruktur (62) des Wasserkastens (50) Mittel vorgesehen sind, um den Bund (74) gegen die Rohrplatte zu belasten.

## Claims

1. Nuclear reactor comprising a tank (10) closed at the top by a removable lid (12), a basket (16) holding the reactor core (18) and separating the tank into an inner hot zone (20) and an outer cold zone (22), at least one steam generator (48) located externally of the tank and comprising a fluid-tight vessel, a tube plate (52) separating the vessel into a primary part, or water chest (50), and a secondary part (54), and carrying U-tubes (56) whose ends open into two concentric zones (58, 60) of the water chest which are separated by an internal structure (62), at least one hot-connection conduit (82) and one cold-connection conduit (46) connecting the hot zone (20) and the cold zone (22) of the tank to a respective concentric zone (60, 58) of the water chest, characterized in that the tube plate (52), the tubes (56) and the secondary part (54) of the steam generator vessel comprise a subassembly dismountable from the primary part (50) of the vessel, the hot-connection conduit (82) being dismountably mounted between the basket (16) and the internal structure of the water chest, said structure (62) being itself dismountably mounted in the primary part of the vessel, and the tank (10) the cold-connection conduit (46) and the primary part (50) of the vessel being formed in a single unit.

2. Nuclear reactor according to Claim 1 characterized in that the hot-connection conduit (82) is straight and has a length less than the internal diameter of the tank, whereby to be removable through the latter after removal of the lid and lifting of the basket.

3. Nuclear reactor according to Claim 2 characterized in that the hot-connection conduit (82) is fixed in fluid-tight manner to the basket (16) by dismountable fixing means, and forms a fluid-tight sliding fit within an orifice formed in the internal structure of the water chest.

4. Nuclear reactor according to Claim 3 characterized in that the dismountable fixing means comprise a key (83) transversely disposed with respect to the hot-connection conduit and normally immobilized by the lid (12) of the tank (10).

5. Nuclear reactor according to any one of the preceding Claims characterized in that the primary (50) and secondary (54) parts of the steam generator vessel (48) have flanges (66, 67) between which are removable holding means (64).

6. Nuclear reactor according to Claim 5 characterized in that the internal structure of the water chest (50) comprises a gasket (74) compressed between the primary (50) and secondary (54) parts of the vessel under the action of removable holding means (64).

7. Nuclear reactor according to Claim 6 characterized in that the internal structure (62) of the water chest (50) comprises two concentric bowls (68, 70) connected by vanes (72) and delimiting the concentric zones (58, 60) of the water chest (50), the gasket (74) compressed between the primary and secondary parts of the vessel being in contact with the external bowl (70).

8. Nuclear reactor according to either of Claims 6 and 7 characterized in that a pump (76) is fixed below the primary part (50) of the vessel, means to urge the gasket (74) against the tube plate being provided between the pump (76) and the internal structure (62) of the water chest (50).

# FIG.1

# FIG.2

FIG.3